# EUROPEAN PATENT SPECIFICATION

(11) **EP 1 423 780 B1**
(45) Date of publication and mention of the grant of the patent: **07.09.2005**
(21) Application number: 02718002.5
(22) Date of filing: 25.03.2002
(51) Int. Cl.: G06F 3/033

(54) **METHOD, SYSTEM AND STORAGE MEDIUM FOR AN ICONIC LANGUAGE COMMUNICATION TOOL**
VERFAHREN, SYSTEM UND SPEICHERMEDIUM FÜR EIN IKONENSPRACHENKOMMUNIKATIONSWERKZEUG
PROCEDE, SYSTEME ET SUPPORT DE STOCKAGE POUR OUTIL DE COMMUNICATION PAR ICONES

(30) Priority: 27.03.2001 US 278995 P; 25.03.2002 US 105556
(43) Date of publication of application: 02.06.2004
(73) Proprietor: LEGO A/S, 7190 Billund (DK); Interlego AG, 6340 Baar (CH)
(72) Inventor: TVESKOV, Bjarne, DK-7000 Fredericia (DK)
(74) Representative: Schwarze, Holm
(86) International application number: PCT/DK2002/000199
(87) International publication number: WO 2002/077782

(56) References cited:
- US-A- 5 748 731
- US-A- 5 973 694
- US-A- 6 022 222
- US-A- 6 061 656
- HANS MÜHLEN: "Installera och använd den grafiskt uppiffade textchaten COMIC CHAT eller MS CHAT." FYSIKUMS INTERNET-KURS, [Online] pages 1-3, XP002902824 Last updated 1997 Retrieved from the Internet: <URL:http://internet.physto.se/chat/comcha t.html> [retrieved on 2003-02-06]
- NILSSON T ET AL: "Självdesign och nätverksexhibitionism." INTERNET EXPLORER DOBEDO, [Online] pages 1-16, XP002902823 Elevseminarium Nya Medier 990522 Retrieved from the Internet: <URL:http://oldwww.cs.umu.se/tdb/kurser/TD BD07/VT-99/esem/esem8.html> [retrieved on 2003-02-06]

## Description

### CROSS-REFERENCE TO RELATED APPLICATIONS

This application claims the benefit of U.S. provisional patent application serial number 60/278,995 filed March 27, 2001.

### BACKGROUND

This disclosure relates generally to a communication tool and, more specifically, to a method, system and storage medium for an iconic language communication tool.
US patent no. 5,973,694 discloses an iconic language communication tool for facilitating the communication involving a language-deficient user, in particular an aphasic patient.
During the last few years, it has become increasingly clear that computers and the Internet have become important means of creative expression and communication. Unfortunately, the Internet is not helpful for communication across language barriers. Additionally, the open and anonymous communication on the Internet presents safety and security issues, especially for children. Internet chat rooms and virtual worlds are popular, but not controllable and, thus, not safe for children. Further, current Internet communications do not allow for real time translations of communications. Finally, current Internet communications do not provide a fun, safe and controlled environment for children around the world to effectively and creatively communicate with each other.
Thus, there is a need for an efficient and effective method, system and storage medium for an iconic language communication tool.

### SUMMARY

An exemplary embodiment is a method, system and storage medium for an iconic language communication tool. The system includes a host system for generating an iconic language communication template for receiving a user icon selection, presenting the iconic language communication template and receiving the user icon selection from the iconic language communication. A network is in communication with the host system, and a database is in communication with the host system.

### BRIEF DESCRIPTION OF THE DRAWINGS

Referring now to the drawings wherein like elements are numbered alike in several FIGURES:
FIG. 1 is a block diagram of an exemplary system for an iconic language communication tool in one embodiment;
FIG. 2 illustrates an exemplary functional flow for an iconic language communication tool;
FIG. 3 depicts an exemplary user interface for creating a user profile for a Web room;
FIG. 4 depicts an exemplary user interface for trading between two users;
FIG. 5 depicts an exemplary user interface of an empty Web room;
FIG. 6 depicts an exemplary user interface of a Web room with virtual objects placed in the Web room;
FIG. 7 depicts an exemplary user interface of a Web room with virtual objects moved around in the Web room;
FIG. 8 illustrates an exemplary method for an iconic language communication tool;
FIG. 9 depicts an exemplary user interface for creating a user profile;
FIG. 10 depicts an exemplary user interface presented after the user profile is created;
FIG. 11 depicts an exemplary user interface for building a communication;
FIG. 12 depicts an exemplary user interface for continuing a dialog of communication;
FIG. 13 depicts an exemplary user interface for a request to trade along with a reply;
FIG. 14 depicts an exemplary user interface for accepting or canceling a trade; and
FIG. 15 illustrates an exemplary method for an iconic language communication tool.

### DETAILED DESCRIPTION

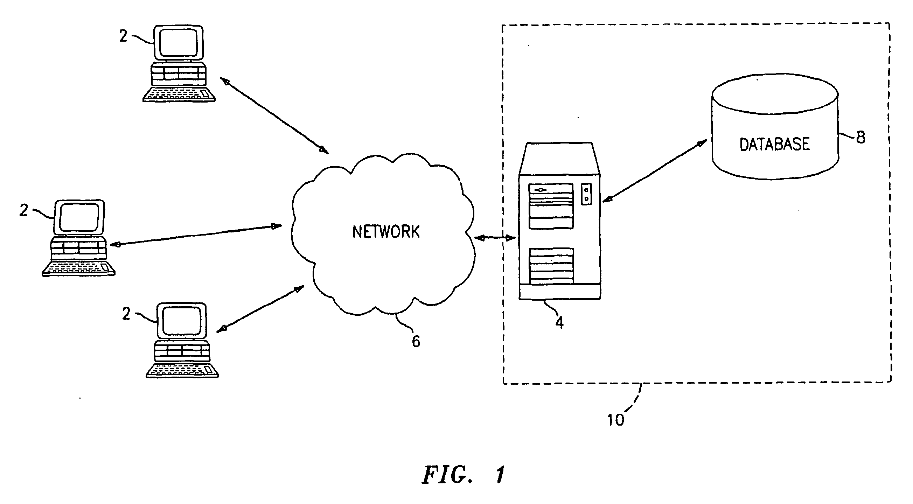

FIG. 1 is a block diagram of a system for an iconic language communication tool in one embodiment. The system includes one or more user systems 2 in communication with or coupled to a host system 10 via a network 6. Each user system 2 may be implemented using a general-purpose computer executing a computer program for carrying out the processes described herein. The network 6 may be any type of known network including a local area network (LAN), wide area network (WAN), global network (e.g., Internet), intranet, extranet, etc. The user systems 2 may be in communication with or coupled to the host system 10 through multiple networks (e.g., intranet and Internet) so that not all user systems 2 are the host system 10 via the same network. One or both of the user systems 2 and the host system 10 may be connected to the network 6 in a wireless fashion and network 6 may be a wireless network. In a preferred embodiment, the network 6 is the Internet and user system 2 executes a user interface application (e.g., Web browser) to contact the host system 10 through the network 6. Alternatively, a user system 2 may be implemented using a device programmed primarily for accessing network 6 such as WebTV or a network computer.

The host system 10 includes a processor, such as a server 4 operating in response to a computer program stored in a storage medium accessible by the server. The server 4 may operate as a network server (often referred to as a Web server) to communicate with the user systems 2. The server 4 handles sending and receiving information to and from user systems 2 and can perform associated tasks. The server 4 may also include a firewall to prevent unauthorized access to the host system 10 and enforce any limitations on authorized access. The firewall may be implemented using conventional hardware and/or software as is known in the art.

The server 4 may also operate as an applications server. In other words, the server 4 may execute one or more computer programs to interact with a database 8. It is understood that separate servers may be used to implement the network server functions and the applications server functions. Alternatively, the network server, firewall and the applications server may be implemented by a single server executing computer programs to perform the requisite functions.

The database 8 contains a variety of information related to an iconic language communication tool. The database 8 may be contained in a legacy, mainframe system also maintained by the affiliate network. Server 4 may interact with database 8 through existing legacy components. Changes to database 8 can be made dynamically, in real time to instantaneously update information contained in the database 8.

Another embodiment of a system for an iconic language communication tool may include maintaining a channel of communication via HTTP queries through an ASP layer. The clients (e.g., users) may be in constant communication with the server(s) so that messages may be exchanged between clients and maintenance of state. Note that another embodiment of maintaining channels of communication may include a direct connection through a TCP/IP socket for real-time communications. Thus, the system provides a client interface to a back end system for enabling the trading of items and exchanging of messages between different clients. Examples of the back end functions may include real-time exchange of messages between clients, maintenance of state including inventory, login status and current trading status, hooks to display certain information from an icon database, client support communication through a common API, high availability through failover and upward scalability through load balancing.

An exemplary embodiment for state maintenance may include utilizing a back end data store that is universally available, and providing failover and load balancing capabilities. State maintenance may also be performed by using ASP application scope variables to store a message queue and client state.

One embodiment uses an iconic language to provide children with an intuitive, secure and global communication tool. Another embodiment may be used to provide a vehicle for building a long-term online community for children and/or adults. The online community may be used by visitors (e.g., users) throughout the world for fostering values through the use of communication construction (in creating messages and "Web rooms"), global communication and exchange. Icons may be used to comprise an easily understood global language with which children and adults may express themselves creatively while communicating with others across both national and cultural boundaries. The iconic language may use a set of constraints (e.g. studs, modularity and/or rectilinearity) to provide for an intuitive iconic language construction system. Further, an embodiment using a broad and expressive vocabulary (via icons) provides for an extensive range of expression.

Iconic language communication may be used for a variety of purposes. For example, in one embodiment, trading "virtual" objects among users of different nationalities may be accomplished by creating a virtual trading "booth" (e.g., a Web page or area thereon for conducting virtual trading) and using language icons. The users do not have to speak the same language, yet they are able to communicate and trade virtual objects using the embodiments described herein. In the exemplary embodiments depicted in the figures, iconic language communication may be used in a child's game for a virtual trading booth. The trading booth allows the users to "break the ice" by using the trading booth to create a dialog of communication and trade a variety of virtual objects. Exemplary trading booth embodiments described herein allow the user to have fun while trading objects and communicating via an iconic language. An embodiment may allow a user to create a personal Web room wherein the user may set up the Web room as a self-expression of personal interests for view by other users. The personal Web room may include one or more virtual objects for user selection. The user may update the Web room with new objects, see other Web rooms posted by other users and/or communicate with other users.

In one embodiment for operation of the system, exemplary software architecture may include several software modules. For example a trading application, Web room building application, icon language home page, active user display page, sign up page and introductory tour are software modules that may be included. In the trading application module, the home page may offer links to other modules, described below, in a manner that follows the overall design of the site. Currently active "features" may have access directly from the homepage, and other modules may be accessed via their "portal" pages. The user may select icons to build messages in, for example, a speech box/window. The user may then send the message to a trading partner. If a trading partner sends or returns a message, the user may view the message. The user may also select to view a collection of currently owned objects. To trade an object, the user may select or drag the object from his/her personal collection to a virtual trading bin (to put the object up for trade with potential trading partners). Also, the user may remove objects from his/her trading bin and return them to the personal collection. The user's trading bin and the trading partner's trading bin (displaying the objects for trade) may be viewed on the same page. Any user may initiate a trade sequence by selecting, for example, a trade button. A selection allowing the user and trading partner to agree (e.g., agree buttons) to the trade may be included. Also, a selection for canceling the trade may be included. If the user and trading partner select their agree buttons, the content of the trading bins is exchanged and the object inventories may be updated in the database 8. However, if either the user or trading partner selects to cancel the trade, before the trade is completed, the trade may be aborted.

The Web room building application module may be segmented into one or more areas. For example, one segment may be for a personal Web room, such as a graphic representation of a room, which may be configured by the user, and viewed by others (e.g., a LEGO.com visitor). An object Inventory Screen segment (e.g., a closet) may be a pop-up window, accessible from the Web room, which contains a user's inventory of objects. A profile screen segment (e.g., a mirror) may be a pop-up window, also accessible from the Web room, which allows a user to create a profile. The profile may include one or more items such as an avatar, an outdoor scene depicting the user's locale, (for example, visible through the room window), a language, a time zone or any other item used for aiding in a user's profile.

The icon language home page module may dynamically refresh its contents based on whether a member has logged in, whether a member has not logged in and/or whether the user is not a member. An active user display page module may be a dynamically generated page displaying a currently active trading booth(s) (e.g., an open booth not currently occupied by a trading partner). A sign up page module may be integrated with a user's registration (e.g., Web Club Registration). An introductory tour for first time user's module may include a sequence of instructions, such as semi-animated or animated instructions, to introduce first time users to icon language concepts and front end interfaces.

A user may also access and navigate other web sites (e.g., LEGO.com). For example, a user may access LEGO.com, with further access to other areas of the web site. For example, access to LEGO.com may include further access to LEGO club, online shopping, a site index, a privacy policy, a help directory, a pull-down menu of other web sites, a search engine, a site map (e.g., to indicate a user's current location within a site architecture, and allow the user to retrace his/her steps), a wish list, a shopping cart, a user sign in (e.g., to LEGO Club). Global Navigation may be included on one or more modules. A site navigation bar may also be included. A registration page may be integrated with club registration. For example, in one embodiment, when a user first signs up for icon language registration, an empty personal Web room may be displayed. However, as described herein, the Web room may include a closet and randomly selected objects. In one embodiment, before the user may begin trading, the user is prompted to select an avatar and a language (e.g., location).

The introductory tour may include one or more selections, such as selections for taking the user to the user's Web room, showing the user who is online, allowing the user to search for another Web room (e.g., by using a nickname or other identifier), and taking the user back to the icon language home page. The icon language home page may include selections depending upon whether or not the user has logged in. For example, if the user has not logged in, the icon language home page may include a selection for the introductory tour and/or an invitation to register with a club. If the user has logged in, the icon language home page may include a selection for showing the user other users currently online (further allowing the user to view currently open booth pages or create his/her own booth page). A selection may be included for a request to take the user to his/her Web room (or another user's Web room), where the user may perform functions, such as provided in the Web room building application. The user may also select to view his/her Web room as it would appear to other users, and confirm that he/she is online and available for trading.

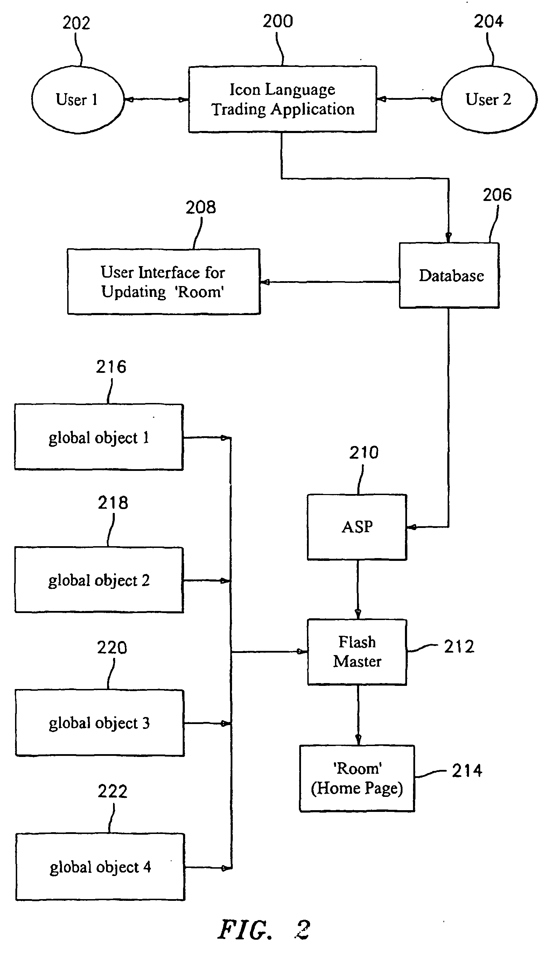

Referring to Figures 2-8, one embodiment for operation of the system will now be described. FIG. 2 is an exemplary flow model for the iconic language communication tool functionality. In one embodiment, two users (202 and 204) are in communication with or coupled to the system, or trading interface 200, which may include user avatar(s), object(s) to be traded and object(s) in user closet(s), icon language button(s), and thought/word bubble(s) (e.g., a cloud or cartouche shaped area) for communication. In an embodiment using a thought bubble, a first user may choose one or more icons to build a message by "clicking" from a group of icons, which then appear in the thought bubble. The thought bubble may include a selector or button for allowing the first user to send the assembly of icon(s) in the thought bubble to a second user. The second user is presented with the assembly of icons(s) in a word bubble (e.g., the thought bubble as seen by the second user), which the second user may view and respond to.

Objects in a user's closet (also referred to as "owned" objects) may be 'flagged' in the database 206, to be distinguished from the objects to be traded. The database 206 may include references to an object, as well as specific user data with flags for owned objects. Note that database 206 may be the same as database 8 (see FIG. 1) or it may be another database in communication with the system.

When users enter the trading interface 200 with the intention of making a trade, the database communicates their respective "owned" objects to an active server page (ASP) 210 which communicates/sends the data to, for example, a Flash Master 212 for generating a vector graphics file format. As used herein, the term "Flash Master" refers to the front end of the software application, for example, the trading booth and personal web room screen(s) presented to the user. Using the ASP 210, the Flash Master 212 may generate ".swf" files based on, for example, background color and selected objects so that objects may be displayed in the trading interface 200 and the Web Room 214. The Flash Master 212 may contain one or more symbols (e.g., placeholders) representing one or more global objects (see 216-222). For example, a collection of global objects may include multiple virtual objects (e.g., an original file for every type of virtual object, including but not limited to a bed, ball and cell phone.). The symbols may be used to prevent multiplicity of, for example thousands of original cell phone files, and thereby save database memory. Thus, the symbols may also represent objects in a database reference table.

The user interface for updating the Web room 214 facilitates the user's ability to move (e.g., "drag and drop") "owned" objects from the closet to a selected location in the personal Web room. Each time an object is moved and/or changed, the corresponding X and Y coordinates are sent to the Database 206. One embodiment may also include automatically saving the object coordinates to the database every 3 seconds.

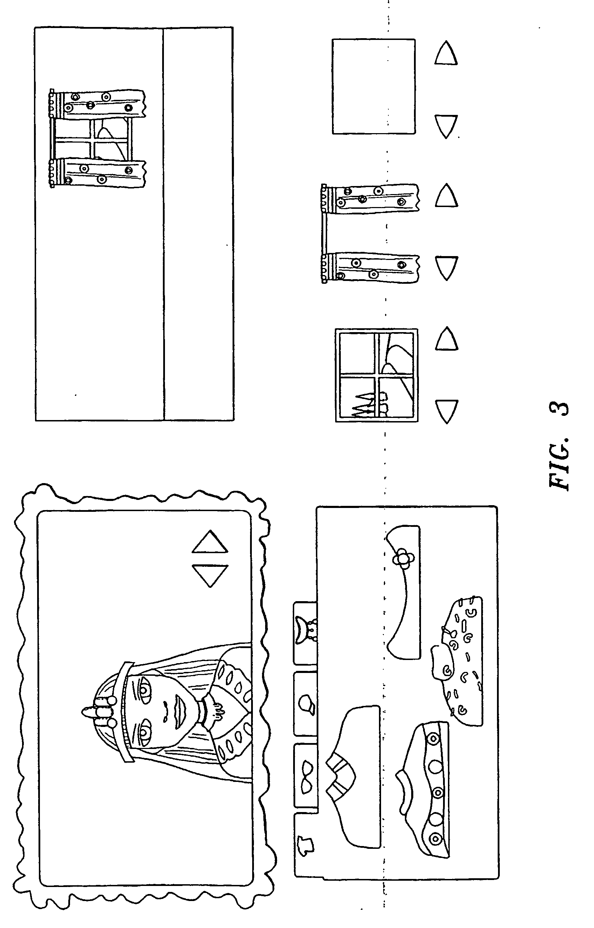

FIG. 3 depicts an exemplary user interface for creating a user profile for a Web room. The home page or Web room may be used to allow for a search of a Web room by a user's nickname, fictional name or the like. In FIG. 3, the user may select an avatar and customize it with various accessories. The Web room may also include a virtual "closet" (e.g., a Web page or area thereon for displaying virtual objects), for currently owned virtual objects and, optionally, randomly selected virtual objects. Further, the closet may contain currently owned objects, which have not yet been placed in the Web room. In one embodiment, the closet may be scrollable and run along the bottom of the Web room page. The closet's contents may be displayed, and the user may move objects from the closet to the Web room and, visa versa. Wallpaper for the Web room may be selected. Also, a view for a window may be selected, such as a city view, seaside view, rural view or the like. Even further, window coverings may be selected (e.g., curtains, blinds and the like), along with being open or closed.

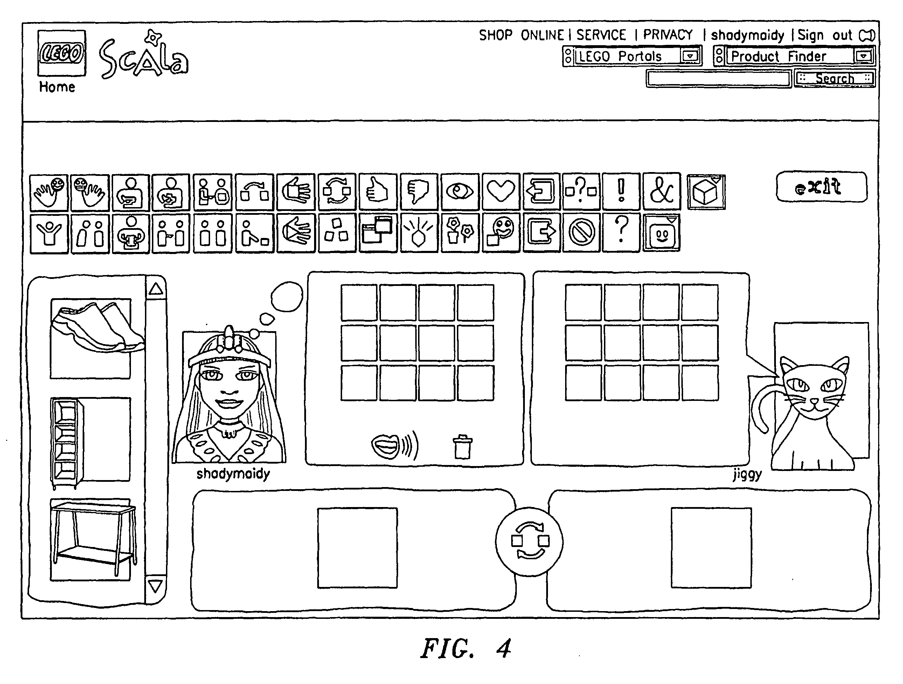

FIG. 4 depicts an exemplary user interface for trading between two users. To help facilitate creating the Web room, the Web room user interface may include one or more selections in the form of a control panel placed, for example, along the bottom of the interface. The user may use the control panel to manipulate objects in the Web room. For example, a selection for changing the size or orientation of an object (e.g. front or side view of a chair) may be included.

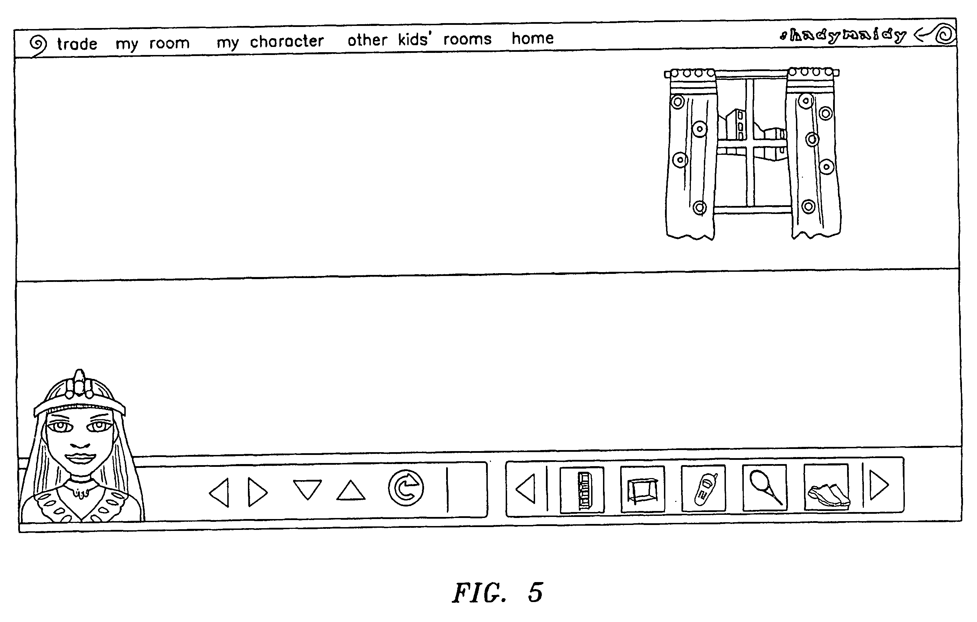

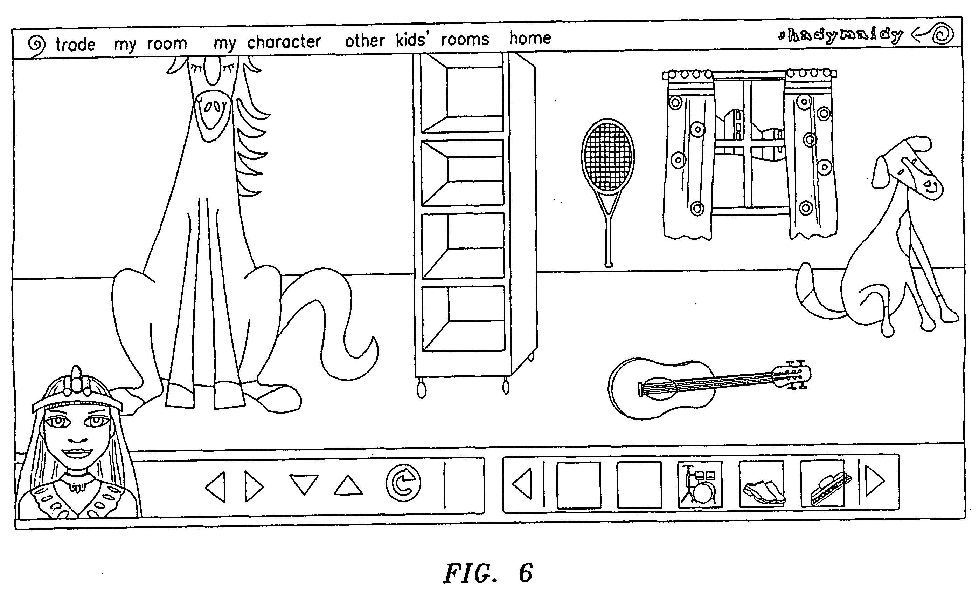

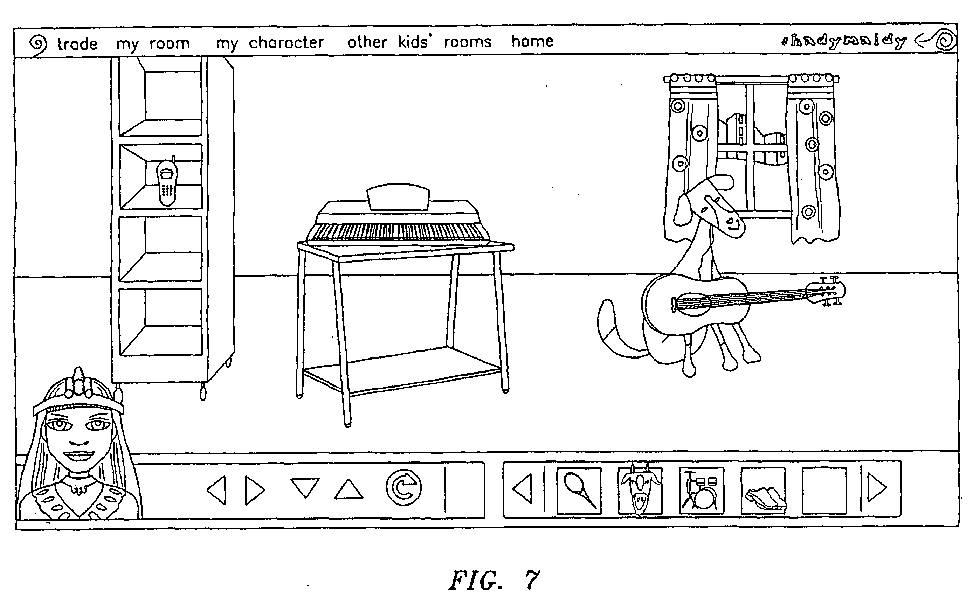

A user may choose to open a trading booth or trade at someone else's booth. The user may build a message by clicking on icons to be placed in a virtual speech box. The message may be sent to another user (e.g., trading partner). The first user may look at her collection of virtual objects, select objects to be traded and then place them in a virtual trading bin. Either user may initiate a trade sequence by selecting, for example, a virtual trade button. The users may agree to a trade or cancel the trade. If both users agree, the virtual trade button may indicate that a successful trade occurred, wherein the virtual trade bins will exchange contents. FIG. 5 depicts an exemplary user interface showing an empty Web room. FIG. 6 depicts an exemplary user interface of a Web room with virtual objects placed in the Web room. FIG. 7 depicts an exemplary user interface of a Web room with virtual objects moved around in the Web room.

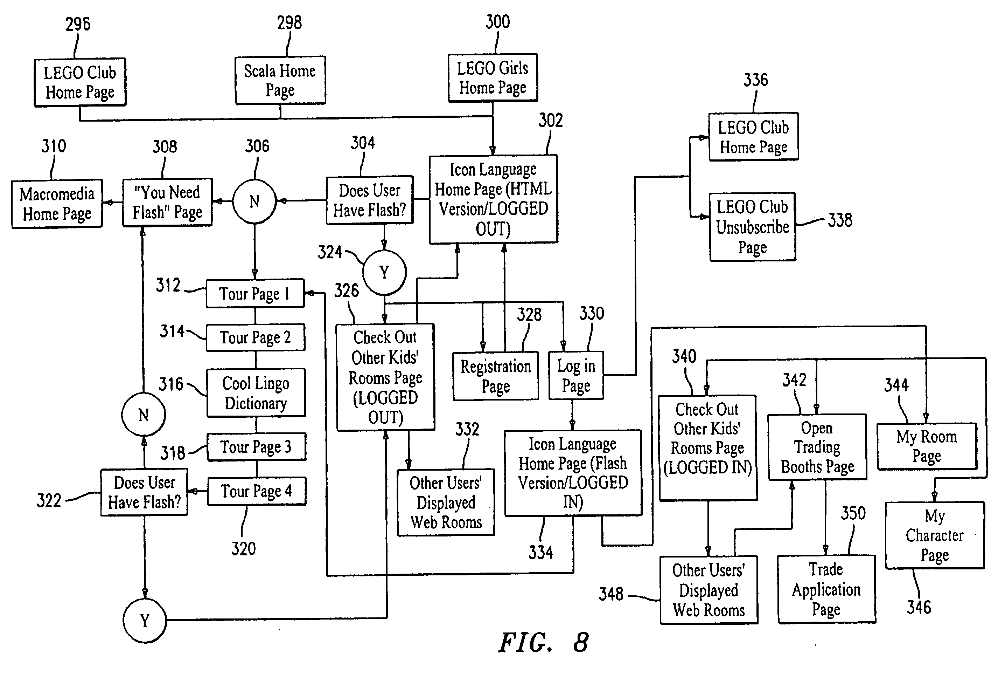

Referring now to FIG. 8, Step 296 links the user to an HTML/Logged out version of an icon language website (Step 302) from, for example, a "New Stuff' section of a main website (e.g., LEGO Club). In such an embodiment, the HTML/Logged out may include a situation when the user has not entered a user id and/or password, and wherein a plug-in application is not required for viewing the website. Of course, in another embodiment, the user may enter the icon language website directly, or enter it from one or more websites. For example, Step 298 links the user to the HTML/Logged out version of the icon language website (Step 302) from a LEGO Scala home page (e.g., a website for LEGO toys targeted for a type of user, such as preteen girls). In another example, Step 300 links the user to the HTML/Logged out version of the icon language site (Step 302) from a LEGO Girls home page (e.g., a website with links targeted for a type of user). Step 302, as stated above, may be the HTML/Logged out version of the icon language website home page. For an embodiment including a certain plug-in application for viewing, Step 304 is the Flash detection for the website. If the user's computer has Flash installed (Step 324), a link to Step 326 may be included. Step 326 may be a logged out version a web page allowing the user to view one or more user's personal web rooms). The user may also be linked to Step 328, a registration page, for allowing the user to join the main website's club (e.g., LEGO Club) and participate in the icon language website. Links to steps 326, 328 and 330 may be accomplished any number of ways, for example, by providing a button on the web page. In one embodiment, once the user has registered in Step 328, the user may be returned to the HTML/Logged out page and choose to link to Step 330 for logging in. The user may also be linked directly to Step 330 for logging in if the user is already a club member.

Step 326 may take the user directly to Step 332, which is the displayed personal web room of another user. An embodiment may include links back to the HTML/Logged out version. Once the user has gone through Step 330 (logging-in), the user may be directed to one or more places (e.g., if the user has forgotten a password, the user will be taken to Step 336). In another example, if the user chooses to rescind club membership, the user will be taken to Step 338 (an unsubscribe page). In another example, if the user has logged in successfully, the user will be taken to Step 334 (a logged in version of the icon language home page). From Steps 336 and 338, the user may be taken back to the HTML/Logged out page. Step 334 may be a "hub" for the logged in page and provide links to other activities on the site. For example, links to another other user's personal web room (see Step 348) and a trade page (see Step 342) may be included. The user may also link directly from Step 334 to 344 and open a trading booth or join a new trading booth (from, for example, a list of other users). From Step 344, the user may be taken to Step 350, where the trade takes place. The user may also link directly from Step 334 to 344 and arrange virtual objects in a virtual web room. The user may also link directly from Step 334 to 344 and choose an avatar and/or outdoor scene, web room decoration, window coverings and the like. Further, a link to Step 346 may be provided via clicking on the user's avatar. An embodiment may include the ability to link from all parts of a logged in site to another site via, for example, a navigation bar.

From the logged in version of the icon language home page, the user may be taken to Step 340, a logged in version for viewing one or more other users' web rooms (Step 348) as well as link up to trades with these users via, for example, a button). The user may also be taken to Step 342 that will allow the user to join an open trading booth, trade with another user or open a trading booth of her own and wait for another user to join. Step 342 leads to Step 350, a trading application page where an iconic communication and virtual object trading may take place. Here, users may communicate their intended trades with one another via icons or pictures, which may appear in word bubbles above their avatar's heads. The contents of a user's closet (e.g., the "owned" virtual objects) may be included in a scrollable menu alongside the user's avatar. The user may click and drag an item for trading into a "trade box" (e.g., area on the web page). Once the users have dragged an item into their respective trade boxes, they may be prompted to activate a trade. For example a "trade activation" button may be presented (e.g., a "thumbs up" icon to activate a trade and a "thumbs down" button to reject a trade). In one embodiment, the trade may be activated when both users click their respective "thumbs up" button. Once the trade has been activated, the items are switched. They may also be automatically added to the users' closets.

A logged in user may also be taken to Step 344, a page for decorating the user's personal web room. For example, in one embodiment, a user may be given 10 randomly selected virtual objects log-in (e.g., placed in the user's closet). Finally, the user may be taken to step 346 where the user may choose, dress, and accessorize the avatar, and/or choose the color, type of window covering, outdoor scene and the like for her personal web room.

In one embodiment, if the user does not have a viewer plug-in (e.g., Flash), but still desires to enter the site (Step 306), the user may be taken directly from step 302 (the HTML/LOGGED out version of the icon language website) to Step 308 which instructs the user that a plug-in application is needed to participate in the web activity. Step 308 may also offer the user a link to Step 310 (a viewer plug-in website) where the user may download a plug-in application.

Users who do not have Flash may explore the site via an introductory tour (see Steps 312, 314, 316, 318, and 320) linked to from the logged out version of the icon language home page (Step 302). Note that the multiple tour steps shown in FIG. 8 are merely illustrative and do not limit the embodiment to multiple tour steps. The tour may be used to give a user a basic overview of the site. For example, one embodiment may include simple animations and a full an icon language dictionary (see Step 316), which may be printed and used as reference for trades and conversations. An embodiment may also include the ability to link to the introductory tour from a logged in page. Once the user has completed the tour, the user may be given the opportunity to log-in, register or install a viewer application (see Step 322).

If the user has Flash, the user may be taken to Step 326 (the logged out version for viewing another user's web page) or to Step 302 (the logged out version of the icon language home page). From Step 302, the user may log-in (Step 330), or register. If the user does not have Flash, the user will be taken to Step 308 (e.g., a "You Need Flash" page). Step 308 may also offer the user a link to Step 310 where the user may download a plug-in viewer.

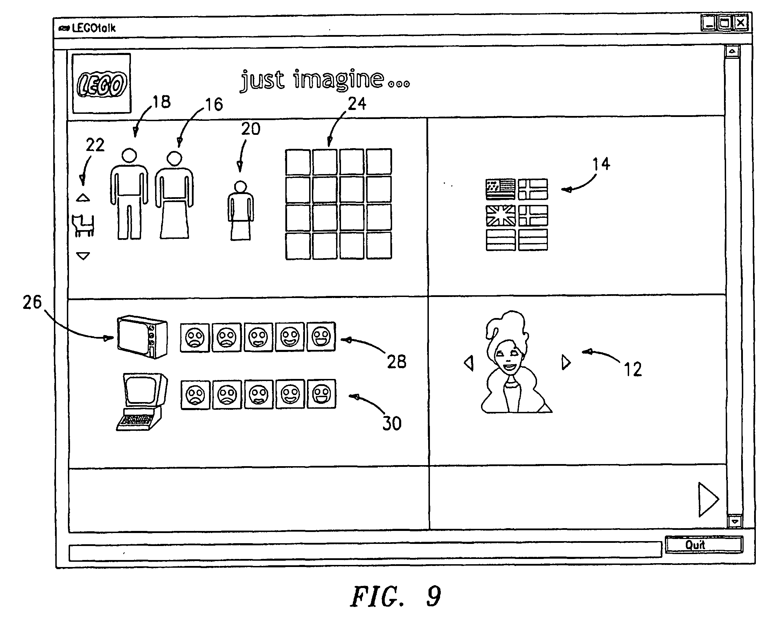

Referring to Figures 9-15, another embodiment for operation of the system will now be described. FIG. 9 depicts an exemplary user interface for creating a user profile. The user may make selections, which represent various aspects or fondness of the user. In one embodiment, the user may select from a variety of avatars 12 that may reflect the likeness of the user. For example, the avatars 12 may depict children, such as girls, of various races, hair color and clothing styles. In another embodiment, the user may select an avatar representing an object the user has a fondness for, such as a cat, dog, or other animal. Another embodiment may include avatars representing objects, such as sun, moon, or any other object. Another selection may include the user's preferred language. The language selection may be made by selecting a flag 14 from a specific country. Of course, the language selections may also be textual. Further, the user may make selections that depict their family, surroundings and interests. For example, the user may select whether they have a mother 16 and/or father 18 and/or siblings 20. Whether the user has a cat 22, dog, etc. and a favorite color 24 may also be selected. Representations of the user's interests may be selected. For example, the user may select whether she has a television 26 and whether she likes to watch it 28. Similarly, the user may select whether she likes to use a computer 30. Of course, any number or variety of selections may be presented to the user, without limitation to the embodiment shown in FIG. 9.

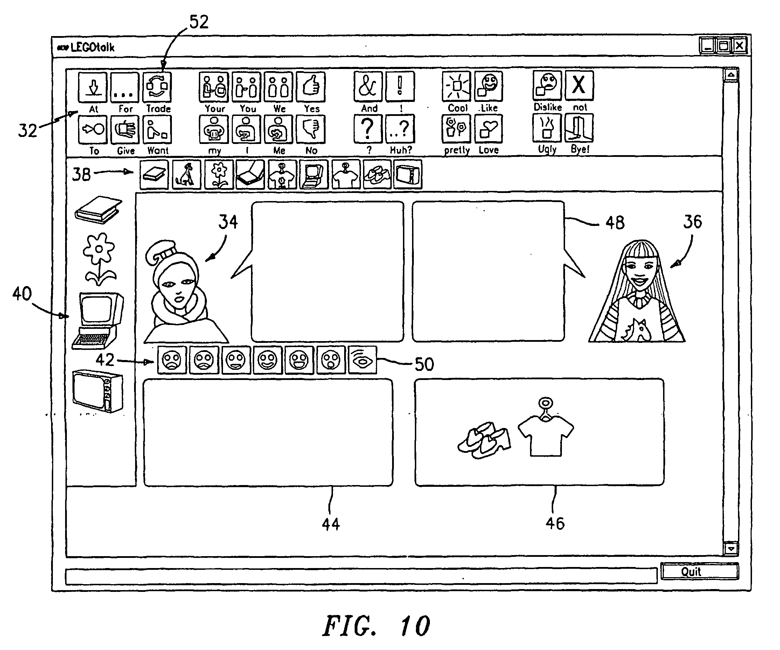

Referring to FIG. 10, a range of communication icons 32 may be displayed on the user interface, with each communication icon 32 corresponding to a particular word, expression and/or emotion. The communication icons 32 may include pictorial representations of a word, expression and/or emotion. In an embodiment used by children, certain predefined communication icons may be created. Thus, the collection of words, expressions and/or emotions may be controllable and, thus, suitable for children. Nevertheless, the icons allow for an extensive variety of sentences and emotions to be communicated between the users. Further, the icons may even allow for playful and nonsensical communication. As shown in FIG. 10, the user may be presented with communication icons 32 including corresponding text (in the user's chosen language). As discussed below, the "trading pals" may communicate via the communication icons 32, and the user is shown the corresponding text in her chosen language. In another embodiment, the user may also be shown the corresponding text in the trading pal's chosen language. In such an embodiment, the user enjoys the additional benefit of learning words in other languages. Additionally, the user may even select to listen to audio corresponding to the communication icons 32 in one or more languages.

Note that FIG. 10 illustrates an exemplary user interface for a user who chooses the left avatar 34, along with a country flag corresponding to the English language. One or more corresponding trading pals may be selected any number of ways. In one embodiment, the user may create a personal "booth," by selecting one or more trading icons 38 (e.g., virtual objects), and then waiting for another user to enter the booth to chat and trade. The trading icons 38 may be a set of "default" icons assigned to the user upon completing the user profile. In another embodiment, the trading icons may be obtained by the user, as described below. Of course, the user may choose to enter another user's booth instead. In such an embodiment, the user may be presented with a user interface (not shown) including a selection of avatars and their corresponding trading icons 38.

The user may select an avatar with trading icons 38 that interest them. The person corresponding to the selected avatar may accept or deny the entry. If denied, the user may select another avatar until entry is accepted. Of course, in another embodiment, the person corresponding to the selected avatar may not be given the choice of accepting or denying entry to the booth.

The user may create her personal booth by choosing from a variety of trading icons 38. As mentioned, the trading booth game is a playful way for the trading pals to learn and communicate with each other, thus, the trading icons 38 may depict various items. For example, trading items such as a book, a dog, a flower, a coloring book, a blouse, a computer, a shirt, a pair of shoes and a television may be presented as trading icons 38. Of course, any variety of trading icons 38 may be used. In one embodiment, additional trading icons 38 may be obtained by directing the user to a Web page that awards a trading icon for registering on the Web page. For example, a user may wish to join an online club, such as LEGO Web club, and be awarded with a trading icon. Further, the user may be awarded a trading icon as an incentive in an online game. In another embodiment, trading icons 38 may be obtained by directing the user in a "treasure hunt." The treasure hunt for trading icons may include sending the user to various Web sites (such as vendors and educational sites) to find the treasure that corresponds to a trading icon. For example, the user may be directed to select from various vendors (such as a national book store chain) to look for treasure, such as a particular book. Such an embodiment may be implemented by presenting the user with selections that link to a page in the vendor's Web site (where the user looks for the treasure). Once found, the treasure may include a link returning the user back to the trading booth, and including code that causes the user to be presented with the trading icon corresponding to the treasure. Note that the user may select one or more trading icons 38 and place them in a "possessions" location 40 to create their personal booth.

In another embodiment, the trading pals may be paired together in different manner. For example the right avatar 36 may be selected by another user and presented to the user depicted by the left avatar 34 (in a previous user interface; not shown) as a choice for a trading pal. As discussed, pairing the trading pals may be implemented in a variety of ways. For example, the trading pals may choose each other (as discussed above), or they may be automatically chosen based on their profile criteria. In another embodiment where the trading pals may choose each other, they may be presented with various avatars including the corresponding user's language or country. If trading pals are chosen based on their profile criteria, the determination may be made based on the number of common interests between two users. Another determination for pairing two users may be just the opposite. In other words, the two may be paired based on their dissimilarities. Of course, a trading pal may simply be chosen from a list of names of active users currently online. Again, many different factors may be the basis for pairing up two users.

Also depicted in FIG. 10 is a range of emotion icons 42 for selection by the user. The user may make a selection at any point while communicating with the other user to express her current emotion. Once an emotion icon 42 is selected, the user's avatar may even change its facial expression to depict the selected emotion. Another embodiment may include corresponding audio, such as giggling, laughing and sighing.

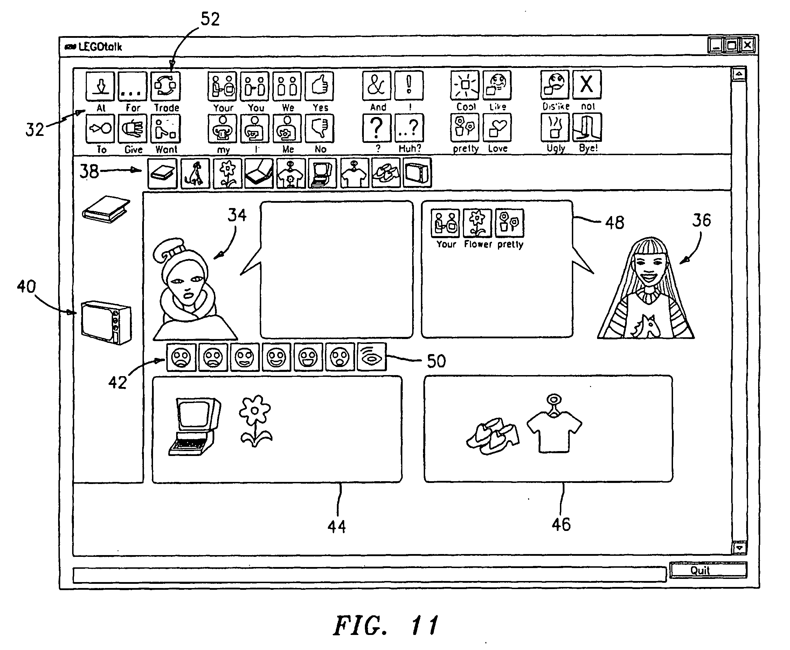

FIG. 11 depicts an exemplary user interface for building a communication. The user may select one or more trading icons 38 from her possessions location 40 to be placed in a trading bin 44. Likewise, the trading icons 38 selected by the trading pal may be displayed in another trading bin 44. In the embodiment of FIG. 11, two trading icons 38 are displayed in the left avatar's 34 trading bin 44. Likewise, two trading icons 38 are displayed in the right avatar's 36 trading bin 46. Either user may begin a dialog of communication by selecting from the communication icons 32. In the example of the FIG. 11, the right avatar 36 selected the communication icons corresponding to "Your," "Flower" and "Pretty." Note that the selected communication icons are displayed in the right avatar's 36 dialog box 48 along with the left avatar's corresponding chosen language. In one embodiment, the dialog of communication is sent to the trading pal by selecting a "moving mouth" icon 50. Of course, any other effective means may be used to send the message, such as pressing the "Enter" key on a computer keyboard, or double clicking in the dialog box.

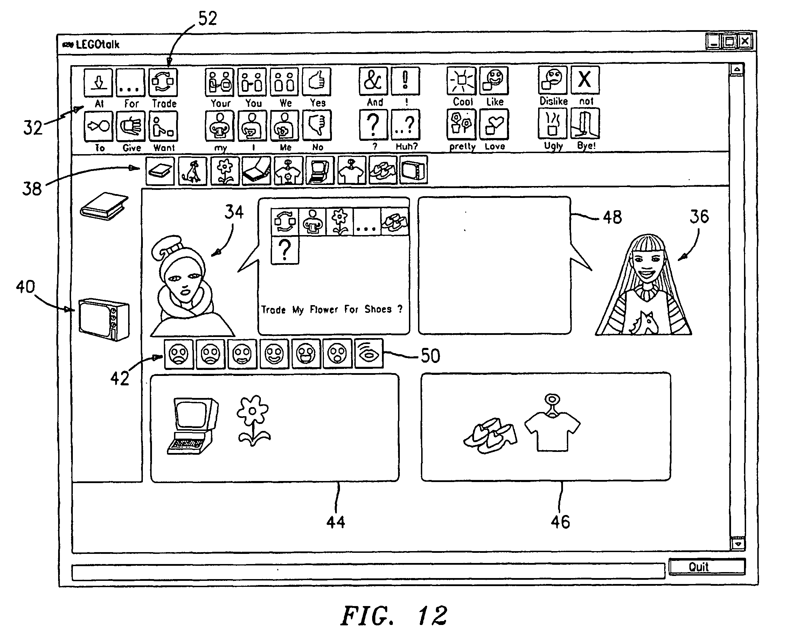

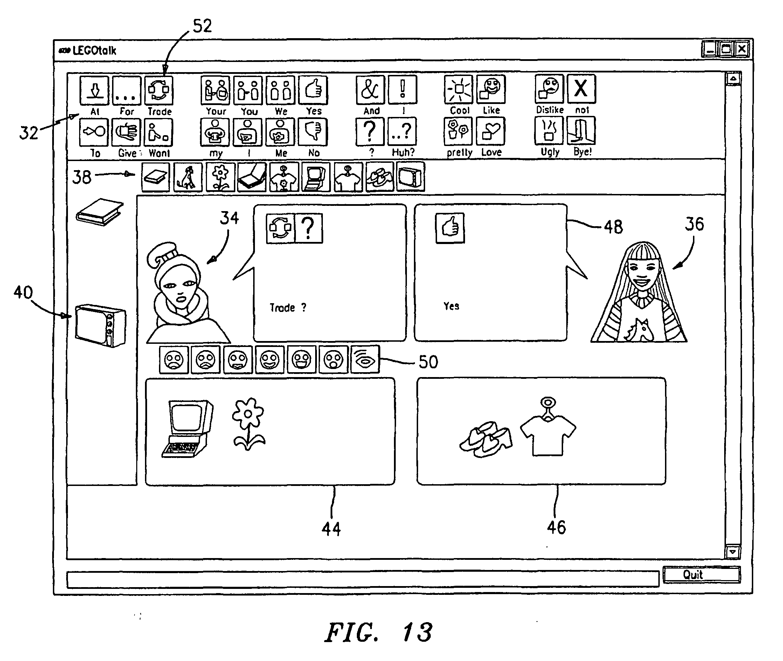

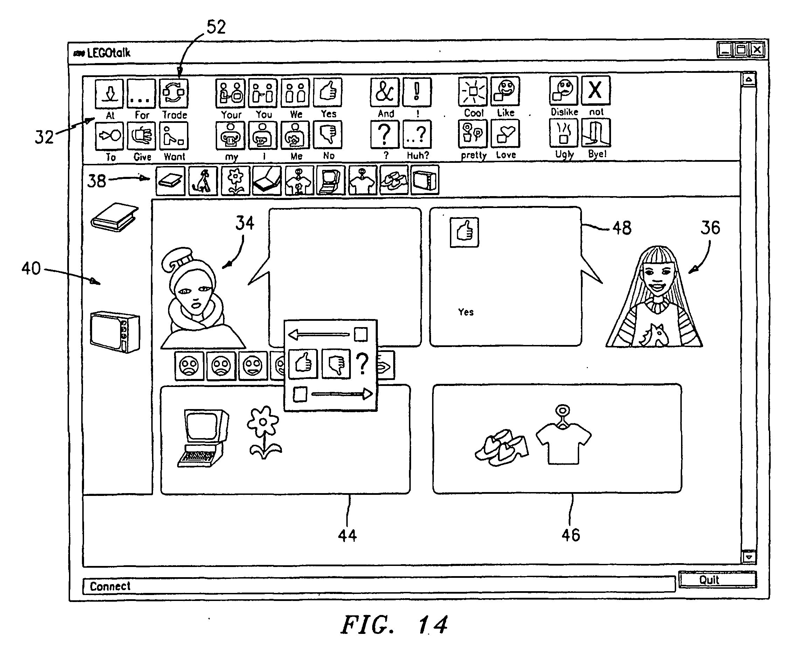

FIG. 12 depicts an exemplary user interface for continuing the communication created in FIG. 11. In the example of FIG. 12, the user corresponding to the left avatar 34 selected communication icons 32 corresponding to the words "Trade," "My," "Flower," "For," "Shoes" and "?" in response to the previous dialog from the left avatar 34. As previously mentioned, in addition to the selected dialog, the user may add an emotion by selecting one of the emotion icons 42. FIG. 13 depicts an exemplary user interface for a request to trade along with a reply. If the user wishes to make a trade for one or more trading icons 38, a "trade" icon 52 may be selected. If the trading pal responds with a "yes" icon, the user may be given the opportunity to accept or decline. FIG. 14 depicts an exemplary user interface for accepting or canceling a trade. As shown, if the user accepts the trade, the items switch places in the trading bins. Note that one embodiment may allow the user to add or remove trading icons 38 from the corresponding trading bin at any time.

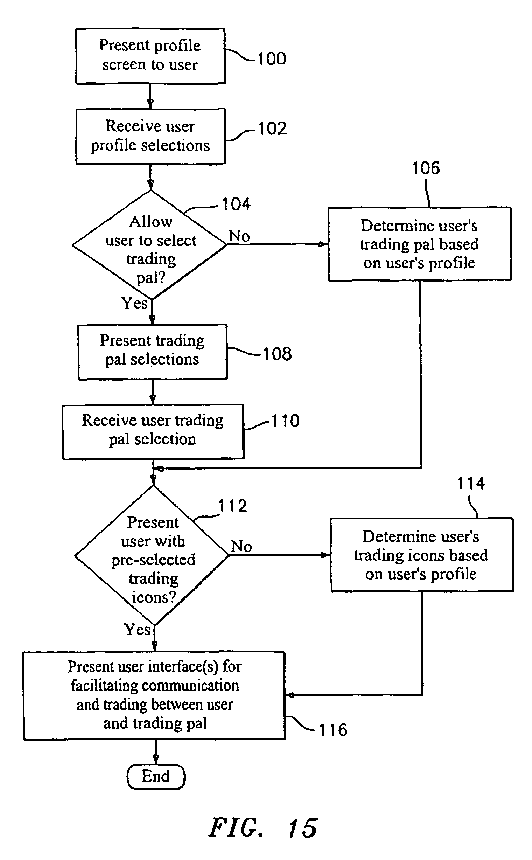

FIG. 15 illustrates another exemplary method for an iconic language communication tool in an embodiment including a trading booth. First, in step 100, the user is presented with a profile screen. An embodiment for the profile screen was described above. However, other embodiments may be directed to children of both sexes and even to adults. In step 1-2, the user's profile selections are received. Step 104 determines whether the user may select a trading pal. If not, then, in step 106, the user's trading pal is automatically selected based on the user's profile. Again, as discussed above, the trading pal selection may be based on any number of factors, such as similarity or differences in profiles. Next, the flow follows to step 112 as discussed below. If, in step 104, the user is allowed to select the trading pal, in step 108, trading pal selections are presented to the user. The variety of trading pal selections may also be based on the user's profile. Other embodiments may allow the user to select from all trading pals currently on the network. In step 110, the user's trading pal selection is received. Note that another embodiment may include multiple trading pals, and with all corresponding users in communication with or coupled to each other. Step 112 determines whether to present the user with pre-selected trading icons. In other words, one or more "fixed" sets of trading icons may be established and used. Also, as previously discussed, the trading icons may be obtained from a "treasure hunt" on various venders' Web sites. If not, in step 114, the user's trading icons are determined based on the user's profile. Note that in such an embodiment, the trading icons may be related to the user's interests and other profile factors. If, in step 112, pre-selected trading icons are presented, in step 116, one or more user interfaces are presented to the user for communication and trading with the trading pal. Flow from step 114 also follows to step 116.

The description applying the above embodiments is merely illustrative. As described above, embodiments in the form of computer-implemented processes and apparatuses for practicing those processes may be included. Also included may be embodiments in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practicing the invention. Also included may be embodiments in the form of computer program code, for example, whether stored in a storage medium, loaded into and/or executed by a computer, or as a data signal transmitted, whether a modulated carrier wave or not, over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

## Claims

1. A method for an iconic language communication tool, the method comprising:
generating an iconic language communication template (32, 48) for receiving a user icon selection;
presenting said iconic language communication template;
receiving said user icon selection from said iconic language communication template; **characterised in that** the method further comprises providing a database (8, 206) for storing an inventory of virtual objects associated to each user;
providing a user interface (200) facilitating trading of one or more virtual objects via a communications network (6), wherein the user interface comprises said iconic language communication template and a trading bin element (44, 46) adapted to display a selection of icons representing virtual objects to be traded;
receiving a request to conduct a virtual trade;
displaying the result of said virtual trade; and
updating the inventory of virtual objects in the database.

2. The method of claim 1, wherein said user icon selection includes a language icon selection.

3. The method of claim 2, wherein said language icon includes a virtual object selection.

4. The method of claim 3, further including generating a user trading template based on said user icon selection.

5. The method of claim 1, wherein said receiving said request to conduct a virtual trade includes:
receiving a request to conduct said virtual trade with a selected trading partner; and
receiving an acceptance to conduct said virtual trade from said selected trading partner.

6. The method of any one of claims 1 through 5, further including:
generating a user Web room template for receiving a user Web room selection;
presenting said user Web room template;
receiving said user Web room selection; and
wherein said generating said user trading template is further based on said user Web room selection.

7. The method of any one of claims 1 through 6, further comprising:
incorporating said user icon selection into said iconic language communication template; and
presenting said iconic language communication template having said user icon selection incorporated therein to another user.

8. The method of any one of claims 1 through 7, wherein said iconic language communication template includes a virtual speech box for building a message based on said user icon selection.

9. The method of any one of claims 1 through 8, further including:
generating a user profile template for receiving a user profile selection; presenting said user profile template;
receiving said user profile selection from said user profile template; and
wherein said generating said iconic language communication template is further based on said user profile selection.

10. A system for an iconic language communication tool, the system comprising:
a host system (10) for generating an iconic language communication template for receiving a user icon selection, presenting said iconic language communication template (32, 48), receiving said user icon selection from said iconic language communication template; **characterised in that** the system further comprises a database (8, 206) for storing an inventory of virtual objects associated to each user; and that the host system is further adapted to
provide a user interface (200) on a user system (2) facilitating trading of one or more virtual objects via a communications network (6), where in the user interface comprises said iconic language communication template and a trading bin element (44, 46) adapted to display a selection of icons representing virtual objects to be traded; and that the host system is further adapted to
receive a request to conduct a virtual trade;
display the result of said virtual trade on the user system; and to
update the inventory of virtual objects in the database.

11. The system of claim 10, further including:
a user system (2) adapted to access said host system via a network.

12. The system of any one of claims 10 through 11, wherein said user icon selection includes a language icon selection.

13. The system of claim 12, wherein said language icon includes a virtual object selection.

14. The system of claim 13, further including said host system generating a user trading template based on said user icon selection.

15. The system of claim 10, wherein said receiving said request to conduct a virtual trade includes said host system:
receiving a request to conduct said virtual trade with a selected trading partner; and
receiving an acceptance to conduct said virtual trade from said selected trading partner.

16. The system of any one of claims 10 through 15, further including said host system:
generating a user Web room template for receiving a user Web room selection;
presenting said user Web room template;
receiving said user Web room selection; and
wherein said generating said user trading template is further based on said user Web room selection.

17. The system of any one of claims 10 through 16, wherein the host system is further adapted to incorporate said user icon selection into said iconic language communication template and presenting said iconic language communication template having said user icon selection incorporated therein to another user.

18. The system of any one of claims 10 through 17, wherein said iconic language communication template includes a virtual speech box for building a message based on said user icon selection.

19. The system of any one of claims 10 through 18, further including said host system:
generating a user profile template for receiving a user profile selection; presenting said user profile template;
receiving said user profile selection from said user profile template; and
wherein said generating said iconic language communication template is further based on said user profile selection.

20. A storage medium encoded with machine-readable computer program code for an iconic language communication tool, the storage medium including instructions for causing a processor to implement the method of any one of claims 1 through 9.

21. A computer data signal for an iconic language communication tool, said computer data signal comprising code configured to cause a processor to implement the method of any one of claims 1 through 9.

## Patentansprüche

1. Verfahren für ein auf Icons gestütztes Sprachkommunikationswerkzeug, wobei das Verfahren umfasst:
Erzeugen eines auf Icons gestützten Sprachkommunikationsmodells (32, 48) zum Erhalten einer Benutzericonauswahl;
Darstellen des auf Icons gestützten Sprachkommunikationsmodells;
Erhalten der Benutzericonauswahl von dem auf Icons gestützten Sprachkommunikationsmodell;
**dadurch gekennzeichnet, dass** das Verfahren ferner aufweist:
Bereitstellen einer Datenbank (8, 206) zum Speichern eines Bestands von jedem Benutzer zugeordneten virtuellen Objekten;
Bereitstellen einer Benutzerschnittstelle (200), die Handeln mit einem oder mehreren virtuellen Objekten über ein Kommunikationsnetz vereinfacht;
wobei die Benutzerschnittstelle das auf Icons gestützte Sprachkommunikationsmodell und ein Handelsabschnittselement (44, 46) aufweist, das zum Anzeigen einer Auswahl von Icons ausgelegt ist, die virtuelle Objekte darstellen, mit denen gehandelt wird;
Empfangen einer Anfrage zum Ausführen eines virtuellen Handels;
Anzeigen des Ergebnisses des virtuellen Handels und
Aktualisieren des Bestands virtueller Objekte in der Datenbank.

2. Verfahren von Anspruch 1, bei dem die Benutzericonauswahl eine Sprachiconauswahl einschließt.

3. Verfahren von Anspruch 2, bei dem das Sprachicon eine virtuelle Objektauswahl einschließt.

4. Verfahren von Anspruch 3, das ferner einschließt, ein Benutzerhandelsmodell basierend auf der Benutzericonauswahl zu erzeugen.

5. Verfahren von Anspruch 1, bei dem der Empfang der Anfrage zur Durchführung eines virtuellen Handels einschließt:
Empfangen einer Anfrage, den virtuellen Handel mit einem ausgewählten Handelspartner auszuführen; und
Empfangen einer Einwilligung, den virtuellen Handel auszuführen, von dem ausgewählten Handelspartner.

6. Verfahren von einem der Ansprüche 1 bis 5, weiter umfassend:
Erzeugen eines Benutzer-Webraummodells zum Erhalten einer Benutzer-Webraumauswahl;
Darstellen des Benutzer-Webraummodells;
Erhalten der Benutzer-Webraumauswahl; und
bei dem die Erzeugung des Benutzerhandelsmodells weiter auf der Benutzer-Webraumauswahl beruht.

7. Verfahren von einem der Ansprüche 1 bis 6, das ferner umfasst:
Einfügen der Benutzericonauswahl in das auf Icons gestützte Sprachkommunikationsmodell; und
Präsentieren des auf Icons gestützten Sprachkommunikationsmodells mit der darin eingefügten Benutzericonauswahl einem anderen Benutzer.

8. Verfahren von einem der Ansprüche 1 bis 7, bei dem das auf Icons gestützte Sprachkommunikationsmodell eine virtuelle Sprachbox zum Aufbauen einer Mitteilung basierend auf der Benutzericonauswahl umfasst.

9. Verfahren von einem der Ansprüche 1 bis 8, ferner umfassend:
Erzeugen eines Benutzerprofilmodells zum Erhalten einer Benutzerprofilauswahl;
Darstellen des Benutzerprofilmodells;
Erhalten der Benutzerprofilauswahl von dem Benutzerprofilmodell; und
wobei die Erzeugung des auf Icons gestützten Sprachkommunikationsmodells weiter auf der Benutzerprofilauswahl basiert.

10. System für ein auf Icons gestütztes Sprachkommunikationswerkzeug, wobei das System aufweist:
ein Hostsystem (10) zum Erzeugen eines auf Icons gestützten Sprachkommunikationsmodells zum Erhalten einer Benutzericonauswahl, die das auf Icons gestützte Sprachkommunikationsmodell (32, 48) darstellt, Erhalten der Benutzericonauswahl von dem auf Icons gestützten Sprachkommunikationsmodell,
**dadurch gekennzeichnet, dass** das System ferner eine Datenbank (8, 206) zum Speichern eines Bestands von jedem Benutzer zugeordneten virtuellen Objekten aufweist; und das Hostsystem ferner auslegt ist, um eine Benutzerschnittstelle (200) auf einem Benutzersystem (2) bereitzustellen, die Handeln mit einem oder mehreren virtuellen Objekten über ein Kommunikationsnetz (6) vereinfacht, wobei die Benutzerschnittstelle das auf Icons gestützte Sprachkommunikationsmodell und ein Handelsabschnittselement (44, 46) aufweist, das zum Anzeigen einer Auswahl von Icons ausgelegt ist, die virtuelle Objekte darstellen, mit denen gehandelt wird; und dass das Hostsystem ferner ausgelegt ist zum
Empfangen einer Anfrage zum Ausführen eines virtuellen Handels;
Anzeigen des Ergebnisses des virtuellen Handels auf dem Benutzersystem;
Aktualisieren des Bestands virtueller Objekte in der Datenbank.

11. System von Anspruch 10, ferner umfassend:
ein Benutzersystem (2), das zum Zugreifen auf das Hostsystem über ein Netz ausgelegt ist.

12. System nach einem der Ansprüche 10 bis 11, bei dem die Benutzericonauswahl eine Sprachiconauswahl einschließt.

13. System von Anspruch 12, bei dem das Sprachicon eine virtuelle Objektauswahl einschließt.

14. System von Anspruch 13, das ferner das Hostsystem einschließt, welches ein Benutzerhandelsmodell basierend auf der Benutzericonauswahl erzeugt.

15. System von Anspruch 10, bei dem der Empfang der Anfrage, einen virtuellen Handel auszuführen, einschließt, dass das Hostsystem:
eine Anfrage erhält, den virtuellen Handel mit einem ausgewählten Handelspartner auszuführen; und
eine Einwilligung zum Ausführen des virtuellen Handels von dem ausgewählten Handelspartner erhält.

16. System von einem der Ansprüche 10 bis 15, das einschließt, dass das Hostsystem:
ein Benutzer-Webraummodell zum Erhalten einer Benutzer-Webraumauswahl erzeugt;
das Benutzer-Webraummodell darstellt;
die Benutzer-Webraumauswahl erhält; und
wobei das Erzeugen des Benutzerhandelsmodells weiter auf der Benutzer-Webraumauswahl basiert.

17. System von einem der Ansprüche 10 bis 16, bei dem das Hostsystem weiter ausgelegt ist, die Benutzericonauswahl in das auf Icons gestützte Sprachkommunikationsmodell einzufügen und das auf Icons gestützte Sprachkommunikationsmodell mit der darin eingefügten Benutzericonauswahl einem anderen Benutzer zu präsentieren.

18. System von einem der Ansprüche 10 bis 17, bei dem das auf Icons gestützte Sprachkommunikationsmodell eine virtuelle Sprachbox zum Aufbauen einer Mitteilung basierend auf der Benutzericonauswahl einschließt.

19. System von einem der Ansprüche 10 bis 18, das weiter das Hostsystem einschließt:
das ein Benutzerprofilmodell zum Erhalten einer Benutzerprofilauswahl erzeugt;
das Benutzerprofilmodell darstellt;
die Benutzerprofilauswahl von dem Benutzerprofilmodell erhält; und
wobei das Erzeugen des auf Icons gestützten Sprachkommunikationsmodells weiter auf der Benutzerprofilauswahl basiert.

20. Speichermedium, das mit einem maschinenlesbaren Computerprogrammcode für ein auf Icons gestütztes Sprachkommunikationswerkzeug codiert ist, wobei das Speichermedium Anweisungen zum Veranlassen eines Prozessors einschließt, das Verfahren eines jeglichen der Ansprüche 1 bis 9 auszuführen.

21. Computerdatensignal für ein auf Icons gestütztes Sprachkommunikationswerkzeug, wobei das Computerdatensignal einen Code aufweist, der zum Veranlassen eines Prozessors, das Verfahren eines der Ansprüche 1 bis 9 auszuführen, ausgelegt ist.

## Revendications

1. Procédé pour un outil de communication par langage iconique, le procédé comprenant :
la génération d'un modèle de communication par langage iconique (32, 48) afin de recevoir une sélection d'icônes utilisateur ;
la présentation dudit modèle de communication par langage iconique ;
la réception de ladite sélection d'icônes utilisateur à partir dudit modèle de communication par langage iconique ; **caractérisé en ce que** le procédé comprend en outre le fait de prévoir une base de données (8, 206) afin de stocker un inventaire des objets virtuels associés à chaque utilisateur ;
le fait de prévoir une interface utilisateur (200) facilitant l'échange d'un ou plusieurs objet(s) virtuel(s) via un réseau de communication (6), où l'interface utilisateur comprend ledit modèle de communication par langage iconique et un élément de panier d'échange (44, 46) adaptés pour afficher une sélection d'icônes représentant les objets virtuels à échanger ;
la réception d'une requête d'échange virtuel ;
l'affichage du résultat dudit échange virtuel ; et
la mise à jour de l'inventaire des objets virtuels dans la base de données.

2. Procédé selon la revendication 1, dans lequel ladite sélection d'icônes utilisateur comprend une sélection d'icônes de langage.

3. Procédé selon la revendication 2, dans lequel ladite icône de langage comprend une sélection d'objets virtuels.

4. Procédé selon la revendication 3, comprenant en outre la génération d'un modèle d'échange utilisateur basé sur ladite sélection d'icônes utilisateur.

5. Procédé selon la revendication 1, dans lequel ladite réception de ladite requête d'échange virtuel comprend :
la réception d'une requête dudit échange virtuel avec un partenaire d'échange sélectionné ; et
la réception d'une acceptation dudit échange virtuel de la part dudit partenaire d'échange sélectionné.

6. Procédé selon l'une quelconque des revendications 1 à 5, comprenant en outre :
la génération d'un modèle d'espace Web utilisateur destiné à recevoir une sélection d'espaces Web utilisateur ;
la présentation dudit modèle d'espace Web utilisateur ;
la réception de ladite sélection d'espaces Web utilisateur ; et
dans lequel ladite génération dudit modèle d'échange utilisateur est en outre basée sur ladite sélection d'espaces Web utilisateur.

7. Procédé selon l'une quelconque des revendications 1 à 6, comprenant en outre :
l'intégration de ladite sélection d'icônes utilisateur audit modèle de communication par langage iconique ; et
la présentation dudit modèle de communication par langage iconique ayant ladite sélection d'icônes utilisateur intégrée à celui-ci, à un autre utilisateur.

8. Procédé selon l'une quelconque des revendications 1 à 7, dans lequel ledit modèle de communication par langage iconique comprend une boîte de dialogue virtuelle destinée à créer un message sur la base de ladite sélection d'icônes utilisateur.

9. Procédé selon l'une quelconque des revendications 1 à 8, comprenant en outre :
la génération d'un modèle de profil d'utilisateur destiné à recevoir une sélection de profils d'utilisateurs ;
la présentation dudit modèle de profil d'utilisateur ;
la réception de ladite sélection de profils d'utilisateurs à partir dudit modèle de profil d'utilisateur ; et
dans lequel ladite génération dudit modèle de communication par icônes est en outre basée sur ladite sélection de profils d'utilisateurs.

10. Système pour un outil de communication par langage iconique, le système comprenant :
un système hôte (10) destiné à générer un modèle de communication par langage iconique afin de recevoir une sélection d'icônes utilisateur, à présenter ledit modèle de communication par langage iconique (32, 48), à recevoir ladite sélection d'icônes utilisateur à partir dudit modèle de communication par langage iconique ; **caractérisé en ce que** le système comprend en outre une base de données (8, 206) destinée à stocker un inventaire des objets virtuels associés à chaque utilisateur ; et **en ce que** le système hôte est en outre adapté pour prévoir une interface utilisateur (200) sur un système utilisateur (2) facilitant l'échange d'un ou plusieurs objet(s) virtuel(s) via un réseau de communication (6), où l'interface utilisateur comprend ledit modèle de communication par langage iconique et un élément de panier d'échange (44, 46) adaptés pour afficher une sélection d'icônes représentant des objets virtuels à échanger ; et **en ce que** le système hôte est en outre adapté pour
recevoir une requête d'échange virtuel ;
afficher le résultat dudit échange virtuel sur le système utilisateur ; et
mettre à jour l'inventaire des objets virtuels dans la base de données.

11. Système selon la revendication 10, comprenant en outre :
un système utilisateur (2) adapté pour accéder audit système hôte via un réseau.

12. Système selon l'une quelconque des revendications 10 à 11, dans lequel ladite sélection d'icônes utilisateur comprend une sélection d'icônes de langage.

13. Système selon la revendication 12, dans lequel ladite icône de langage comprend une sélection d'objets virtuels.

14. Système selon la revendication 13, comprenant en outre ledit système hôte générant un modèle d'échange utilisateur sur la base de ladite sélection d'icônes utilisateur.

15. Système selon la revendication 10, dans lequel ladite réception de ladite requête d'échange virtuel comprend ledit système hôte :
recevant une requête dudit échange virtuel avec un partenaire d'échange sélectionné ; et
recevant une acceptation dudit échange virtuel de la part dudit partenaire d'échange sélectionné.

16. Système selon l'une quelconque des revendications 10 à 15, comprenant en outre ledit système hôte :
générant un modèle d'espace Web utilisateur destiné à recevoir une sélection d'espaces Web utilisateur ;
présentant ledit modèle d'espace Web utilisateur ;
recevant ladite sélection d'espaces Web utilisateur ; et
dans lequel ladite génération dudit modèle d'échange utilisateur est en outre basée sur ladite sélection d'espaces Web utilisateur.

17. Système selon l'une quelconque des revendications 10 à 16, dans lequel le système hôte est en outre adapté pour intégrer ladite sélection d'icônes utilisateur audit modèle de communication par langage iconique et pour présenter ledit modèle de communication par langage iconique ayant ladite sélection d'icônes utilisateur intégrée à celui-ci, à un autre utilisateur.

18. Système selon l'une quelconque des revendications 10 à 17, dans lequel ledit modèle de communication par langage iconique comprend une boîte de dialogue virtuelle destinée à créer un message sur la base de ladite sélection d'icônes utilisateur.

19. Système selon l'une quelconque des revendications 10 à 18, comprenant en outre ledit système hôte :
générant un modèle de profil d'utilisateur afin de recevoir une sélection de profils d'utilisateurs ;
présentant ledit modèle de profil d'utilisateur ;
recevant ladite sélection de profils d'utilisateurs à partir dudit modèle de profil d'utilisateur ; et
dans lequel ladite génération dudit modèle de communication par langage iconique est en outre basée sur ladite sélection de profils d'utilisateurs.

20. Support de stockage encodé avec un code de programme informatique pouvant être lu par une machine et destiné à un outil de communication par langage iconique, le support de stockage comprenant des instructions permettant à un microprocesseur de mettre en oeuvre le procédé selon l'une quelconque des revendications 1 à 19.

21. Signal de données informatique destiné à un outil de communication par icônes, ledit signal de données informatique comprenant un code configuré afin qu'un processeur mette en oeuvre le procédé selon l'une quelconque des revendications 1 à 19.
